# EUROPEAN PATENT APPLICATION

(11) **EP 1 602 271 A1**
(43) Date of publication of application: **07.12.2005**
(21) Application number: 03706640.4
(22) Date of filing: 31.01.2003
(51) Int. Cl.: A01G 9/02, A01G 9/20

(54) **MODULAR FLOWER BOX COMPRISING WATER DRAINAGE SYSTEM AND CLAMP/SUPPORT WHICH IS USED TO CONNECT MODULES AND WHICH CAN HOUSE A LIGHTING ELEMENT**

(71) Applicant: Joyru S.L., 28025 Madrid (ES)
(72) Inventor: GONZALEZ MIGUEZ, Jose, E-28025 Madrid (ES)
(74) Representative: Urizar Anasagasti, José Antonio
(86) International application number: PCT/ES2003/000059
(87) International publication number: WO 2004/066714

(57) **Abstract**

The invention relates to a modular, double wall flower box which enables the excess water from watering to be drained and the roots and soil to be aerated. The inventive flower box comprises inter-module connecting clamp/supports which are disposed between reinforced or non-reinforced longitudinal modules and angular modules preferably having angles of 901 or 1351. The invention also comprises covers which are used to close the ends of the abovementioned modules. In this way, all of the aforementioned components form a single flower box which is solid, leak-tight and easy to assemble and which allows for the installation of an automatic watering system.

## Description

### OBJECT OF THE INVENTION

The object of the present invention patent, as expressed in the title of this disclosure, is related to a modular plant pot with a double interior wall for the evacuation of excess water, the plant pot being made up of lengthwise or angular structure modules or a combination of both, all of which are open-ended. These modules are joined by way of the supports-brackets, can be open at the top or closed forming a solid ring-shaped support. Both the modules and the support bases adopt a "U" shape, having a larger opening at their open areas. The individual modules, and those forming a set, are closed at their ends by way of closing covers, which are coupled and sealed to the modules. The supports-brackets and the closing covers, once assembled, are fixed by screws around all their periphery, thus achieving solid closure and sealing throughout the whole plant pot set. The support brackets are made up of a set of parts which facilitate a series of different assemblies, as well as positioning the upper support, prepared for locating any type of lighting element support, since this upper support basis has several notches or radial slots which facilitate fixing the lighting support by means of the screws.

### BACKGROUND OF THE INVENTION

Plant pots that are manufactured and sold to be used in gardens, on balconies and roof-gardens, offices and in decorative areas of shopping facilities have certain set dimensions, which often cannot be joined to form a single plant pot when the plotting is different, as well as the weight of many of them due to the material they are made of.

The plant pots currently on the market are independent units which are not designed for a specific area or enclosure that is to be gardened, since current designs do not facilitate making a type of plant pot that can form a single unit that adapts to the places to be gardened.

Several plant pots cannot be joined up to form a single one.

Current plant pots do not feature evacuation of excess water over the ground or support surface.

Within the current plant pots there are no parts for fixing any lighting elements onto.

The type of plant pot which is related to the object of the invention to be protected resolves all of the aforementioned problems, such as improvement through an innovative, open-ended, modular plant pot system, for both lengthwise or angular modules, providing connections among them by way of open or closed supports-brackets, and the possibility to couple upper support bases upon them so that any lighting element can be affixed, thus forming a continuous, unified plant pot as a single assembly with lighting.

### DESCRIPTION OF THE INVENTION

In order to overcome the drawbacks and lacking features of current plant pots, the invention disclosed herein forms a single, continuous plant pot due to the innovative type of materials and their predisposition to be assembled or joined together in a simple way, different from those that exist on the market, since it is modular and has open ends which are designed to be joined together, by means of the supports-brackets which, due to their design facilitate a solid, sealed, homogeneous and resistant assembly. The single plant pot is designed for lighting elements to be fixed onto the joining supports-brackets, which forms the set of parts that make it up.

The modular plant pot, unique in its configuration, is made up of lengthwise, angular, open-ended modules, the opening being slightly larger than the basis of the module. These modules feature a double inner wall, with a height of preferably 1/3 that of the side of the module. At the top of this double wall, it features a series of sequential holes where the excess water poured onto the plants is gathered and evacuated, and which facilitate ventilation of the roots and earth. In addition to the lengthwise main module, another variation is presented, a reinforced lengthwise module, where the side walls and the bottom also include, as well as the double wall for evacuating water, another wall that branches from the former one and is less thick, the interior of which is made up of a series of nerves that provide the assembly with greater consistency, thus avoiding outward buckling once the plant pot is filled with earth.

The angular modules preferably have 901 and 1351 angles, and due to their structural shape do not need this reinforcement.

The main or reinforced lengthwise modules at their outer support parts include closed channelling shoulders situated lengthwise, not reaching all the way to the end of the module, in order to facilitate attaching the supports-brackets, and whose purpose is also to isolate the lengthwise modules directly from the support surface.

The angular modules may feature on their lower exterior support parts, lengthwise channeled shoulders which do not reach to the ends of the modules. The supports-brackets do not features said shoulders.

The set of modules used, whether they be lengthwise, reinforced or angular, as well as a combination of the above in order to form a single united plant pot their connection is carried out by a range of supports-brackets arranged in different manners.

One of the supports-brackets is assembled with a single, double-walled part with separation nerve, the ends of the modules being lodged in this double wall, within it this support includes a double wall at the bottom which facilitates lodging the double wall that is within the modules. In order to reinforce the support in the interior, and over the double wall, several shoulders are positioned on them to strengthen them. These supports do not need the lower support shoulders on the floor due to their configuration.

An upside-down-"U"-shaped part can be coupled onto the upper part of this support, the upper surface of which is prepared with radially positioned slots or gaps in order to house the screws which facilitate coupling the lighting elements to the basis with the module-joining support-bracket, this set of support-bracket and the upper coupling part form a closed or ring-shaped bracket assembly, thus providing the unified plant pot with more solidity.

Another support-bracket is formed by a closed or ring-shaped exterior piece with its upper surface prepared with radially positioned slots or gaps for housing the screws and facilitating joining the basis of the lantern or light with the closed ring-shaped support-bracket. This support is complemented by the "U"-shaped part, comprising two parts, an inner metallic one or of similar material, and an outer rubber one, this assembly of the two parts is positioned within the support-bracket, the ends of the modules to be joined being located between the closed exterior part and the assembly of the interior part assembly.

The bracket-support can be positioned differently to those described above, comprising parts, one upper, open exterior one and slightly rounded upper sides for allowing the modules and the inner coupling part to be connected. The inner part is made up of two bodies, one inner metallic one or of a material appropriate for this type of plant pot and glued to the exterior of this, a rubber part, forming a single assembly, this outer rubber part is that which is in contact with the inner modules. This part, the module and the outer part, once joined with the screws around its whole perimeter, form a unified, solid and seal-tight assembly.

Another part which forms the modular plant pot is the end closing cover for the different modules which make up the single plant pot. The closing cover of the end of the modules or an assembly of them, due to its design allows sides to have double walls in the form of slots in order to lodge the ends of the modules to be assembled. At the bottom part of its interior it features a double wall for lodging the lower part of the modules joined together, as well as several holes at its upper part for evacuating water and a lower side widening of this double side wall for facilitating introducing the double wall of the modules.

Another variation of the closing cover of the ends of the modules of the single modular plant pot is made up of two parts. The basis, which on its closing surface includes a side collar attached to it, leaving a peripheral shoulder for lodging the open-"U"-shaped part, these two parts include sequential holes around their entire perimeter between this part and that of the basis, the ends of the modules are lodged, forming a solid and seal-tight closure by way of screws.

In order to complete the description included below and to provide an improved understanding of the characteristics of the invention, the present disclosure is accompanied by diagrams on the basis of which the innovations and advantages of the object of the invention can be more easily understood.

### BRIEF DESCRIPTION OF THE DRAWINGS

Figure 1 shows a perspective view of the modular plant pot where the lengthwise modules are positioned, the angular module, the supports-brackets for joining them and the closing covers, as well as the situation of the double wall and the holes bored in it for water evacuation.

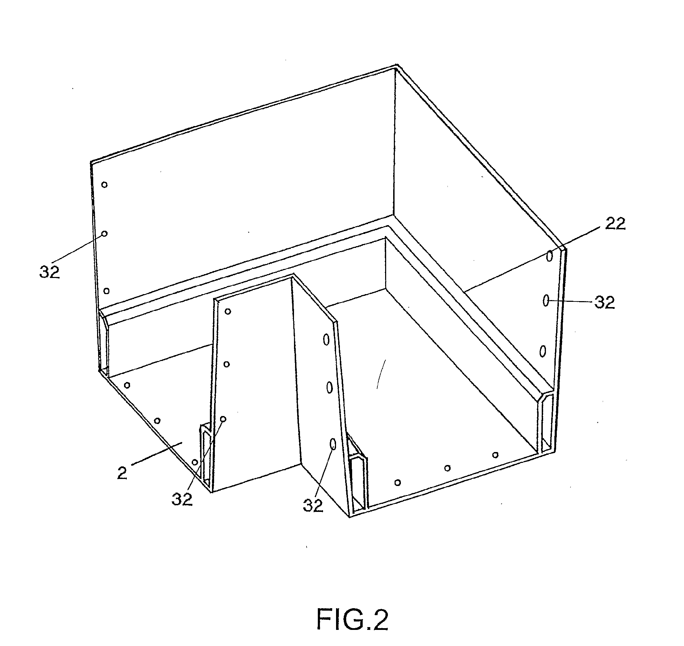

Figure 2 shows a perspective view of the angular modules, its structure, and the positioning of the double wall for water evacuation.

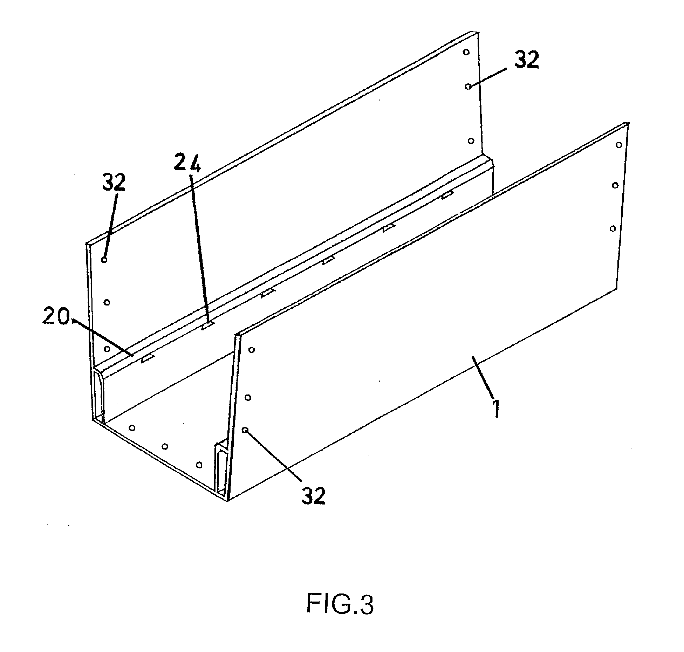

Figure 3 shows a perspective view of the main lengthwise module with the positioning of the double wall and the location of the holes for water evacuation.
Figure 4 shows a perspective view of the positioning of the closing cover on a lengthwise module.

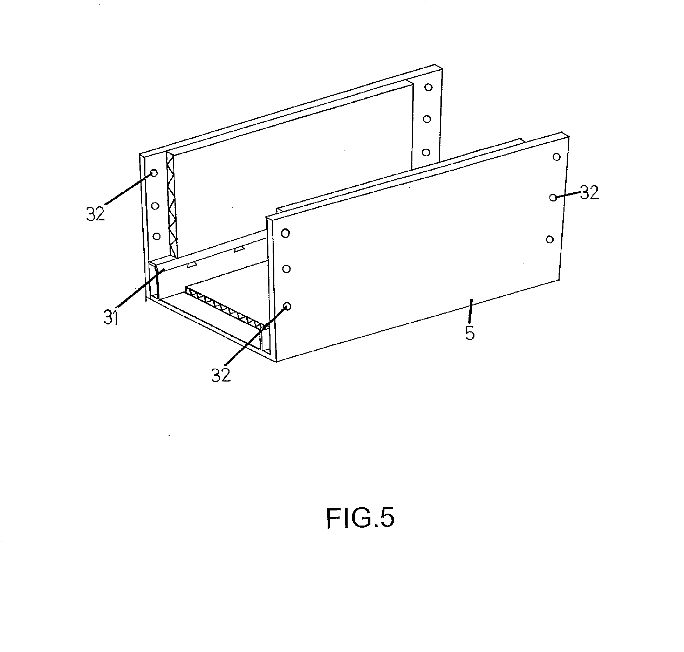

Figure 5 shows a perspective view of the reinforced lengthwise module, with double wall for water evacuation, through the holes bored in it, as well as the double wall along the side and bottom surfaces, this double wall features lengthwise nerves within its interior, its thickness is less than that of the double wall where the water evacuation holes are located, thus providing the module with a solid structure.
Figure 6 shows perspective views of the parts which make up the different sets of supports-brackets which form the connections among the modules.
Figure 7 shows a perspective view of the closing covers and the parts which form it in order for it to be situated at the open ends of the modules which form the unified plant pot.
Figure 8 shows a perspective view of a lengthwise main or reinforced module, where reference is made to the shoulders positioned lengthwise, these shoulders do not reach the ends of the modules, in order to lodge the module-joining supports-brackets.

### PREFERRED EMBODIMENT OF THE INVENTION

The present preferred practical embodiment of the invention, of the modular plant pot with water evacuation system, the connecting support-bracket, the closing covers which are located at the ends of the lengthwise or angular modules or combinations of both. Both the support-bracket and the end closing cover include double walls. This double wall or slots facilitate lodging the ends of the modules in order to fit them together perfectly and provide a leak-proof seal within the entire assembly of the unified plant pot. Both the support-bracket and the closing covers present a set of options and combinations depending on the area to be covered for the embodiment of the unified plant pot. The support-bracket and its variations are designed so that the lighting elements or lamps can be located within them, thus obtaining a unified plant pot with or without lighting.

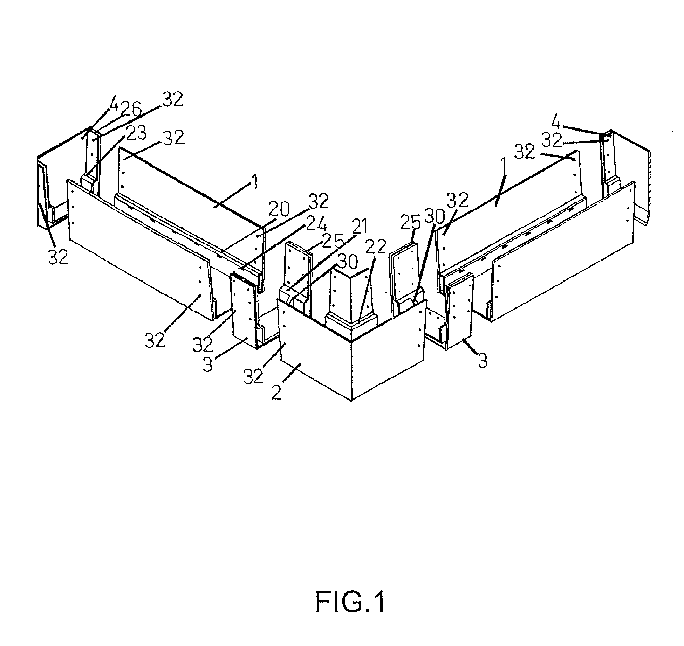

Figure 1 shows an embodiment of the unified, uniform and solid plant pot where the main lengthwise module (1), the angular one (2), the support-bracket (3) for joining the modules and the closure cover (4), which is positioned at the open ends of the plant pot.

The lengthwise module (1) feature within them and from the basis of the module a double wall (20) at 1/3 of the lateral height of the module, this wall includes a number of holes (24) where excess water is evacuated from and allows the roots and earth to be ventilated. The angular modules (2) have double walls (22) as well as the holes for evacuating the water facilitating ventilation of the roots and earth. The support-bracket (3) features slots (25) on its double wall for lodging the open ends of the lengthwise (1) or angular (2) modules, as well as the double wall (21) which allows the double wall of the modules to be lodged within it when assembled. These support-brackets include reinforcement (30), which makes them more resistant to deformation when they are joined to the modules.

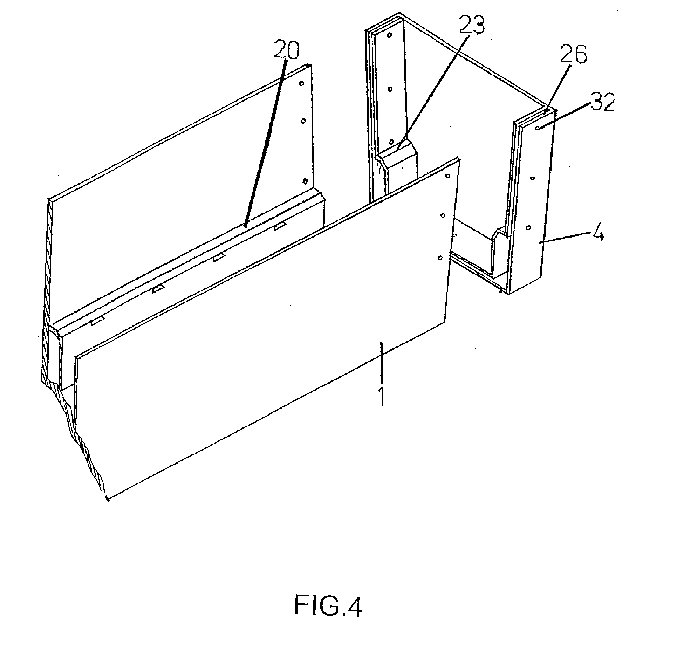

The closure cover (4), as shown in figs. 1, 4 and 7, is made up of the side surface of the double wall (26), this double wall forming a slot for lodging the ends of the modules, as well as the double wall (23), in order to lodge the ends of the double wall (20), (22) and (31) of the lengthwise (1) and angular (2) modules, as well as the reinforced lengthwise modules.

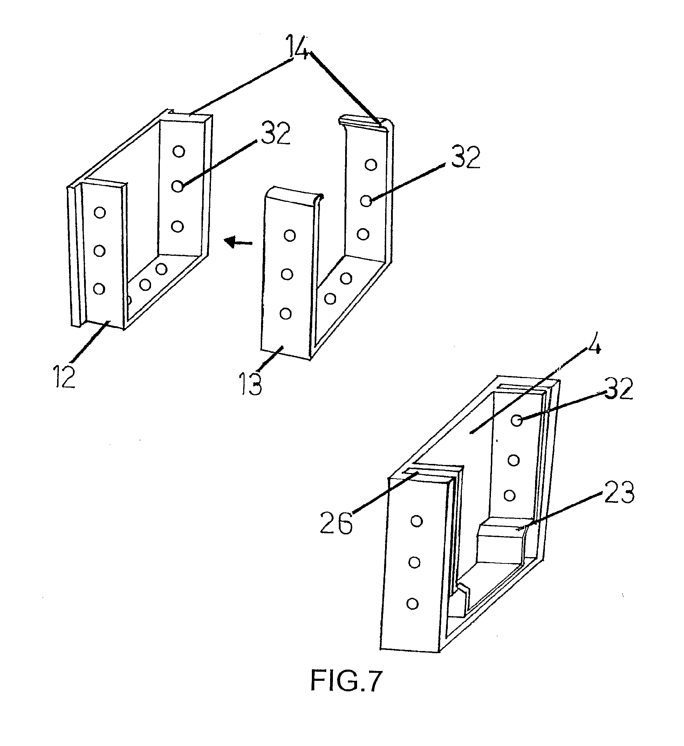

The part (8) can be coupled onto the support-bracket (3), as shown in figure 7, when a lighting element is to be situated on the unified plant pot. The part (8) takes the shape of an upside-down "U" with an upper surface that features slots or gaps (27) situated radially in order to lodge the screws to the basis of the lighting elements. This part (8) is assembled onto the top-exterior of the support-bracket (3) and affixed to the exterior by way of the screws.

The support-brackets, the closure covers, as well as the lengthwise, angular and reinforced lengthwise modules, have a series of holes (32) or drill-holes. All of the parts which make up the unified modular plant pot have holes in the same position of distances and measures so that any of the parts can be connected to one another, at its outer periphery, as shown in figs. 1 onwards. The entire set of modules, support-bracket and closure covers are attached by way of appropriate screws, in order to obtain a solid and highly leak-proof assembly.

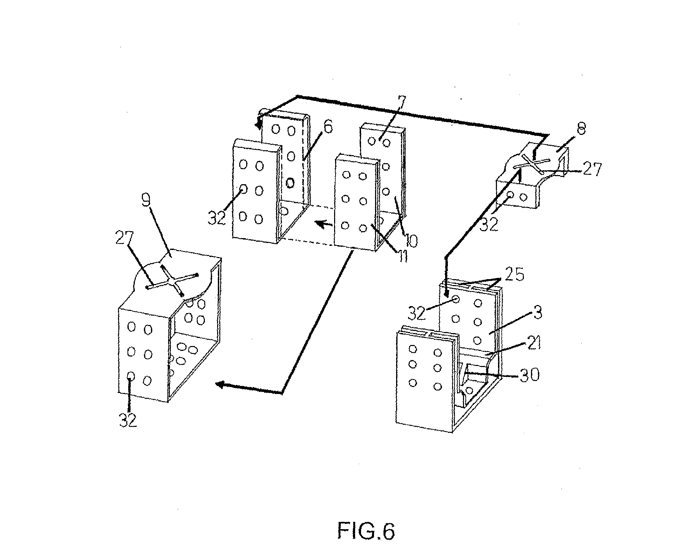

Another variation of the support-bracket that is used in the modules indicated is that which is made up (as shown in fig. 6) of the open "U"-shaped support part (6), and the interior part (7), made up of two parts, the inner one (10) of resistant material, and the rubber outer one (11), to provide sealing upon entering into contact with the surfaces of the ends of the modules, all of the assembly is fixed by way of the existing lateral holes (32) and with the appropriate screws. When a lighting element is required to be installed on this support, part (8) is mounted, configured in the shape of an upside-down "U", which is joined to the support-bracket (6) piece. Part (8) is provided on its surface with the required slots.

Included within the range of supports-brackets used to join the aforementioned modules is the ring-type closed surrounding support, where, as shown in figure 6, the ring-type closed surrounding support, in order to fix the modules and the basis of the lighting assembly. This closed support is made up of part (9), surrounding the exterior of the ends of the modules. The part (9) features slots (27) on its upper surface for fixing the basis of the lighting assembly, on the inside of the part (9) is located part (7), formed by two parts, an internal part (10) made of resistant material or similar, and the rubber exterior part (11), forming a solid and sealed assembly when joined by screws by way of the holes (32) located on their periphery.

Another one of the elements which form part of the unified plant pot are the closing covers (4) of the modules, as shown in figure 7. This closing cover (4) formed in its structure by a double wall lateral to the front or closing surface. This double wall forms a slot (26) along its perimeter, having a widened area (23) of the double wall at its lower inner area for lodging the end part of the double wall (20) of the modules, where the holes (24) are located, which are designed for evacuation of water. Along the periphery of the flap of the double wall (26) a number of holes (32) are located for joining the ends of the modules by way of screws.

Among the closing covers that are used in the aforementioned modules are included the closing cover (14) made up of parts (12) and (13), (as shown in figure 7). Part (12) features on its closing surface an open peripheral flap, positioned in the interior with respect to the exterior perimeter of the closing surface, this flap has a number of holes (32). Part (13) has an open "U" shape with upper rims and with a number of holes (32) around its entire perimeter. Part (13) is mounted on the exterior of part (12) and between the flap of part (12) and part (13) is located at the end of the different modules, which with the screws obtains a leak-proof closure.

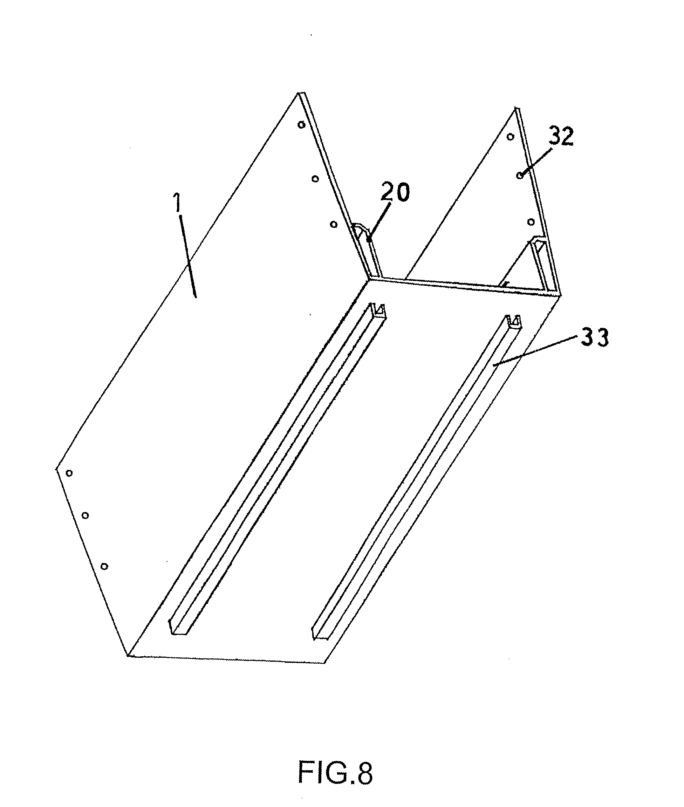

Lengthwise modules (1) and the reinforced lengthwise modules (5), feature on the exterior support surface on the floor, lengthwise shoulders (33), (see fig. 8), not reaching the ends of the modules, so that the ends of the supports-brackets are lodged when the assembly is set up, thus obtaining a solid and sealed connection.

The lengthwise or angular modules, as well as the support-brackets, are designed to be piled one upon another, the lower surface resting on the shoulder of the double wall provided for water evacuation, due to the larger size of the open part, thus achieving protection of the parts and reduction of storage space needed for them.

Having sufficiently described the nature of the present invention, as well as the procedure for putting it into practice, we only need add that changes may be made in the form, materials and arrangement of both the totality and the parts that make it up, as long as said alterations do not substantially alter the characteristics of the invention claimed below.

## Claims

1. Modular plant pot with water evacuation system, support-bracket for joining modules to one another, adequate for situating the lighting element, and closing cover located at the ends of the modules. The whole assembly forms a single plant pot, adequate for installing a self-watering system, **characterised in that** it is configured by lengthwise modules with or without reinforcement, angular modules, supports-brackets for joining the open modules, closed modules or a combination of both, the closed or ring-shaped supports have their upper surfaces prepared for positioning the basis of the lighting elements, and the covers for lateral closure of the modules. All of the assemblies carried out with the different components of the unified plant pot are complemented by tightening the screw through the holes on the sides of all of the parts (modules, supports and covers) or sealing, or a combination of screws-sealing, in order to obtain a solid, tightly sealed assembly.

2. Modular plant pot with water evacuation system, support-bracket for joining modules, adequate for locating lighting and closing cover at the ends of the modules according to the first claim, **characterised in that** the lengthwise modules have attached in their lower inferior part a double lateral wall, this lateral wall has a preferred height of 1/3 of the lateral height of the -module, at the top of this double wall, there are a series of sequential holes where the excess water is evacuated to the exterior by a series of holes that the modules have in its inferior surface. These holes facilitate ventilation of the roots and other parts.

3. Modular plant pot with water evacuation system, support-bracket for joining modules, adequate for locating lighting and closing cover at the ends of the modules according to the first claim, **characterised in that** the lengthwise reinforced module is made up of a double lateral wall and on the lengthwise basis, the lateral wall and from the basis begins on the water evacuation double wall being of lesser thickness. The interior of this double wall is made up of a series of lengthwise nerves so as to provide the module with greater resistance. Both at its lateral part and its lower part this double wall does not reach the ends to allow joining the supports-brackets and the covers upon assembly.

4. Modular plant pot with water evacuation system, support for joining modules, adequate for lighting and closing cover at the ends of the modules according to the second and third claim, **characterised in that** the lengthwise modules with or without reinforcement include lengthwise shoulders on their lower, exterior parts where they rest on the ground, which do not reach to the ends of the modules, in order to lodge the ends of the supports-brackets and closure covers upon assembly.

5. Modular plant pot with water evacuation system, support-bracket for joining modules, adequate for situating lighting and closing cover according to the first claim, **characterised in that** the angular module preferably comprises angles of between 90° and 135°. These modules include a double wall located on their outer external area preferably at 1/3 of the lateral height of the module. This double wall includes at its upper area a number of holes for water evacuation and for ventilating the roots. The angular modules have holes on the support surface for evacuating water gathered by the holes of the double wall. These angular modules, due to their structure, preferably do not have support shoulders.
One of the angular modules features a laminate form at one of its ends and all along its exterior perimeter for its assembly with the double wall end. The other end, opposite to the aforementioned one, has a double wall all alon its perimeter for lodging the laminate end of the module to be assembled. These exterior peripheral endings include a number of holes for lodging screws or sealing when assembly among modules is carried out.

6. Modular plant pot with water evacuation system, support-bracket for joining modules, adequate for situating lighting and closing cover according to the first claim, **characterised in that** the support-bracket for joining modules together is made up of a double wall in the form of a slot for lodging the edges of the modules, at its lower inner part includes a wider double wall than those in the modules in order to facilitate assembly among them. The support includes lateral reinforcement located on its lower internal area, this support is complemented by an upside-down-"U"-shaped part situated on the upper part of the support forming a ring-shaped support, the upper surface is prepared for affixing the basis of the lighting elements. These supports have a number of lateral holes, which facilitate fixing the assembly (support modules), by way of screws, or sealing, or a combination of screw-sealing.

7. Modular plant pot with water evacuation system, support-bracket for joining modules, adequate for locating lighting and closing cover, according to the first, second and third claims, **characterised in that** the modules are joined by way of the support-bracket made up of two "U"-shaped parts, an exterior one with the lateral faces ending in a slightly folded form, which attaches to the ends of the modules upon assembly, and the other part is situated within the interior pressing the ends of the modules, covered by the face that exerts pressure by a rubber surface so that once assembled and screwed together a leak-tight closure is obtained. An upside-down-"U"-shaped part with an appropriate upper surface can be coupled to this support with slots for facilitating screwing and fixing the basis of the lighting element.

8. Modular plant pot with water evaluation system, support-bracket for joining modules, adequate for situating lighting and closing cover at the ends of the modules according to the first, second and third claims, **characterised in that** the union among the modules is carried out by way of the closed or ring-shaped support-bracket made up of two parts, a closed one that surrounds the ends of the modules and where the upper surface is sized with slots for lodging the screws of the lighting element, and the other, "U"-shaped part is situated within the closed or ring-shaped part, the outer surface of the part is covered with rubber, which when pressed to the ends of the modules by way of the screws, produces a leak-proof seal.

9. Modular plant pot with water evaluation system, support-bracket for joining modules, adequate for situating lighting and closing cover at the ends of the modules according to the first, second and third claims, **characterised in that** the closing covers that are coupled to the open ends of the lengthwise modules with / without reinforcement and the angular ones, is made up of the closure side, with double wall rims for lodging the ends of the modules in, this double wall in its lower part widens so that the double wall of the modules can be introduced in it. The peripheral lateral rim features a number of holes for introducing screws when it is fixed to the modules, or sealing, or a combination of screw-sealing, in order to obtain a solid and leak-proof closure.

10. Modular plant pot with water evaluation system, support-bracket for joining modules, adequate for situating lighting and closing cover at the ends of the modules according to the first, second and third claims, **characterised in that** one of the closing covers is made up of two parts, one formed by the flat stopper surface with a peripheral rim extending out of the exterior border of the flat surface, this rim has a number of holes for lodging screws, the other part takes the shape of a "U" with lateral faces slightly rounded at their upper ends, and featuring a number of holes throughout for lodging screws. The part is situated **in that** which has a rim in its interior and between the two the end of the modules is introduced, in order to join them by way of screws, or sealing, or a combination of screws-sealing and obtain leak-proof closure.
